# EUROPEAN PATENT SPECIFICATION

(11) **EP 3 659 818 B1**
(45) Date of publication and mention of the grant of the patent: **22.06.2022**
(21) Application number: 19213001.1
(22) Date of filing: 02.12.2019
(51) Int. Cl.: B60B 21/10, B60B 21/02, B60C 15/02

(54) **A RIM FOR VEHICLES**
FAHRZEUGFELGE
JANTE POUR VEHICULES

(30) Priority: 30.11.2018 IT 201800010746
(43) Date of publication of application: 03.06.2020
(73) Proprietor: WHITE PEACOCK SRL, 35030 Veggiano (PD) (IT)
(72) Inventor: PENADA, Mario, 35139 Padova (IT)
(74) Representative: Locas, Davide

(56) References cited:
- WO-A1-2016/193697
- DE-A1-102013 003 699
- GB-A- 2 121 738

## Description

The present invention relates to a rim for a vehicle, in particular for a road vehicle, which may also be suitable for use on a track. The rim according to the present invention is preferably, though not exclusively, used in motor vehicles and motorcycles.

In the context of the present invention, the term "rim" is intended to be understood to refer to a wheel for a vehicle excluding the tyre.

In the scope of the technical sector being referred to, there are known a plurality of different constructions of rims for road use.

Typically, the different solutions differ as a result of the construction of the spokes, that is to say, in the region which connects the hub to the wheel channel, where the tyre is fixed.

However, the differences mainly have an aesthetic purpose or at most a purpose of reinforcing the structure in the region of the hub. In particular, those modifications are normally directed towards limiting costs and weight, extending as far as involving the number and form of the spokes rather than other portions of the rim.

An example of a rim is also described in the patent application DE102013003699, in relation to a rim which is provided with a flanged edge at one of the sides which allows a disk-like covering shell to be fixed.

Another example of a rim which is produced in particular for agricultural vehicles is described in WO2016/193697. This document describes a rim which is formed by a main disk-like member which can be fixed to the hub of the axle of the wheel of the vehicle and by an external ring which is fixed by welding to the main member, on which the channel for the tyre is formed.

Another known solution is also described in the patent GB 2 121 738.

However, the Applicant has found a need for new solutions for rims which are not only capable of improving the above-mentioned features but which also have a positive effect on the performance levels of the vehicle on which the rim is used.

Therefore, the technical problem which is addressed by the present invention is to provide a rim for vehicles which allows the known solutions to be improved and which can at least partially overcome one or more of the disadvantages which can be identified in relation to the prior art.

In the context of this problem, an object of the present invention is to provide a rim which allows the tyre to be retained in a stable and precise manner without affecting the weight excessively.

Another object of the present invention is to provide a rim which allows the sensations to be improved in all the phases of steering and in particular during travel of the vehicle round bends and during acceleration and braking.

An object of the present invention is also to provide a rim which is capable of conferring greater stability on the tyre inside the channel.

This problem is solved and these objectives are achieved by a rim for vehicles which is produced according to one or more of the appended claims.

It will be appreciated that the rim of the present invention allows the production of an improvement in the known solutions in terms of a greater rigidity of the receiving channel of the tyre as a result of the presence of the extension which extends from the abutment shoulder, on which the bead of the tyre is supported, and which is formed on the edge of the rim itself.

This feature further allows an improvement of the rigidity of the channel, without excessively influencing the overall weight of the rim. In this manner, it is possible to have less deformation of the channel during use of the rim and to improve the overall response of the tyre, in particular during acceleration, braking and bend travel phases. In fact, in this manner there has been found greater stability of the tyre inside the channel, which allows better control of the vehicle, particularly on bends and during rapid changes of direction, and better steering sensations in general.

Preferably, in the rim of the present invention, both the edges are provided with a respective extension. In general, there is present in the rim a first and a second edge which, in a vehicle with four wheels, coincide with the internal edge and external edge while in a motor vehicle they are constituted by the right edge and the left edge. It will be appreciated that the distinction, in particular in vehicles with two or three wheels, may be purely conceptual, there being no construction characteristics which are different between the two edges. In any case, typically the right edge and left edge are defined once the assembly of the tyre has been carried out in accordance with the specific use.

In some embodiments, as will be better seen below, the channel comprises a central portion which defines an internal surface, which is directed during use towards the tyre, and an external surface which is directed towards the hub, the extension being axially separated from the shoulder by a separation space. In this manner, the structure of the channel can be strengthened, optimizing the increase of material, and therefore of weight, with respect to the known solutions.

According to another aspect of the invention, the extension extends over a distance preferably greater than or equal to 3 mm and even more preferably between 3 and 12 mm from a maximum diameter of the rim. In some embodiments, the extension has a predominantly longitudinal extent and preferably the ratio between the length of the extension and the maximum diameter of the rim is between 0.003 and 0.04.

Therefore, it will be appreciated that, as a result of these characteristics, the extension may bring about the above-mentioned effect without having an excessive impact on the aerodynamic behaviour of the rim.

According to preferred embodiments, the extension extends from the shoulder in the form of a ring which is coaxial with respect to the rotation axis of the rim, therefore allowing a simple construction thereof by means of the conventional rim production systems.

In some embodiments, the extension comprises at least a portion which extends inside a plane perpendicular to the rotation axis of the rim, optimizing the additional dimensions which result from the presence of the extension.

According to another aspect, the edge comprises a rounded connection portion which joins the shoulder and the extension. In this manner, stress accumulation zones can be avoided, consequently improving the robustness of the rim. Preferably, the rounded portion has a radius of curvature in the region of the side which is directed towards the axis of the wheel between 0.25 mm and 11.5 mm.

According to preferred embodiments, the ratio between the extent in the radial direction of the extension and the shoulder is greater than or equal to 0.15 and preferably between 0.15 and 1.3. In this manner, it is possible to produce sufficient reinforcement of the channel of the tyre without excessively affecting the weights and the additional dimensions resulting from the presence of the extension.

Additional preferred features of the invention are defined in the dependent claims.

The features and advantages of the invention will be better appreciated from the detailed description of a number of embodiments thereof which are illustrated by way of nonlimiting example with reference to the appended drawings, in which:
- Figure 1 is a front view of a rim according to the present invention;
- Figure 2 is a partially sectioned view according to a radial plane of the rim of the present invention with a relevant tyre mounted;
- Figures 3 and 3A are a partially sectioned view according to a radial plane and a relevant detail of the rim of the present invention; and
- Figures 4 and 4A are a partially sectioned view according to a radial plane and a relevant detail of the rim of the present invention according to an alternative embodiment.

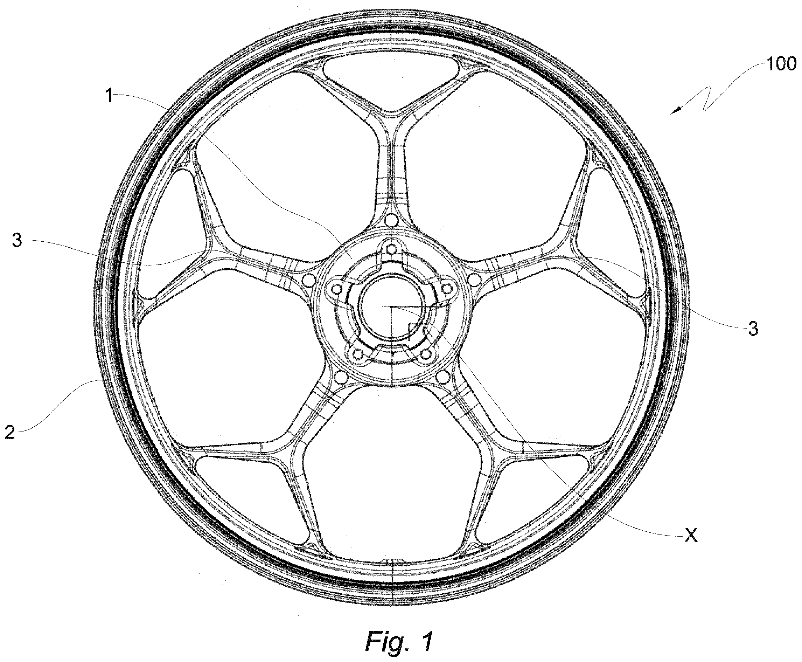

Initially with reference to Figure 1, there is generally designated 100 a rim for a vehicle which is constructed according to the present invention.

According to a first embodiment, the rim 100 is of the type which is suitable for use in a motorcycle and has a diameter of 17 inches, i.e., approximately 432 mm.

It will be understood that the above-indicated values represent the nominal diameter of the rim in accordance with the tyre which is intended to be mounted thereon.

As illustrated in Figure 1, the rim for a vehicle 100 comprises a hub 1, a channel 2 for receiving a tyre 101 and a plurality of spokes 3 which join the hub 1 and the channel 2.

The hub 1 unambiguously defines a rotation axis X of the rim 101, there being provided suitable connection means on the axle of the vehicle which is not illustrated in the Figure. It will be appreciated that the rim 100 of the present invention is preferably produced as a single piece, therefore without welding or any other joining system between the hub 1, channel 2 and spokes 3.

In preferred embodiments, the rim 100 is constructed from a material which is selected from the following: magnesium alloys, aluminium alloys, titanium, composite resins (for example, glass fibre, Kevlar fibre, carbon fibre, admixtures) or plastics materials.

These materials can, for example, be processed by means of one of the following methods: full processing, processing from a forged member, derived forging processing operations, partial forging, melting, casting, diecasting, stamping, 3D printing technology, additive manufacturing.

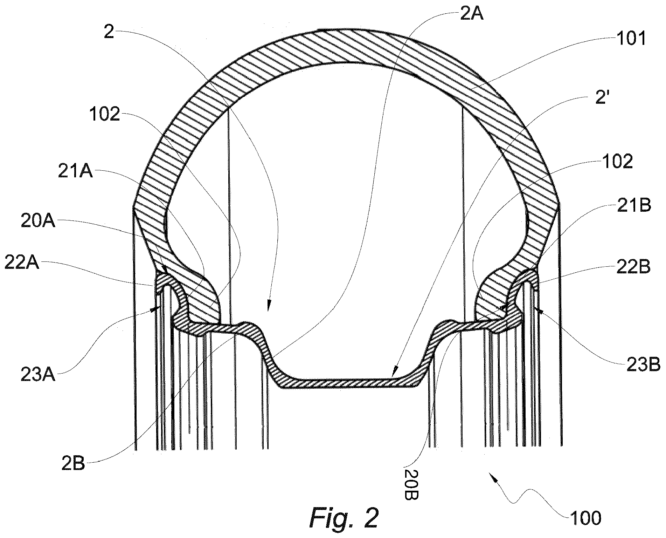

Figure 2 illustrates a detail of the rim 100 with the tyre 101 mounted.

The channel 2 comprises a central portion 2', to which the spokes 3 are connected, preferably in the region of an intermediate portion thereof. The central portion 2' defines an internal surface 2A which is directed, during use, towards the tyre 101, and an external surface 2B which is directed towards the hub 1.

In preferred embodiments, the channel 2 comprises an internal edge 20A and an external edge 20B, between which there is defined a seat 20 in the region of which the tyre 101 is mounted.

The internal edge 20A and the external edge 20B comprise a respective abutment shoulder 21A, 21B which is capable of retaining the bead 102 of the tyre 101, in a manner which is known per se.

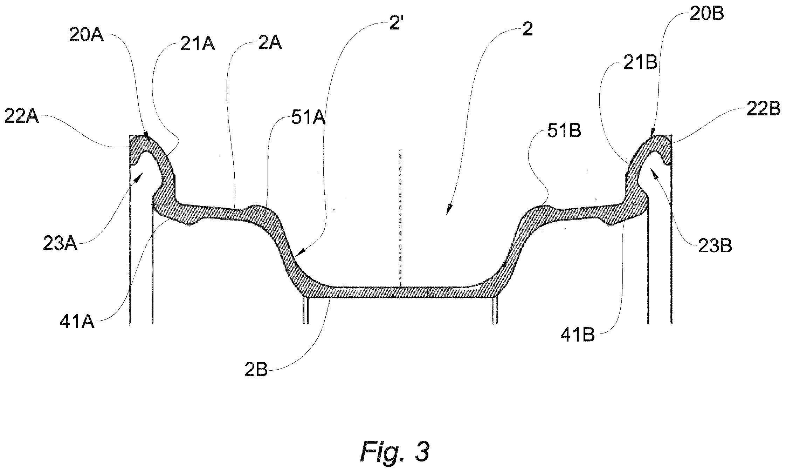

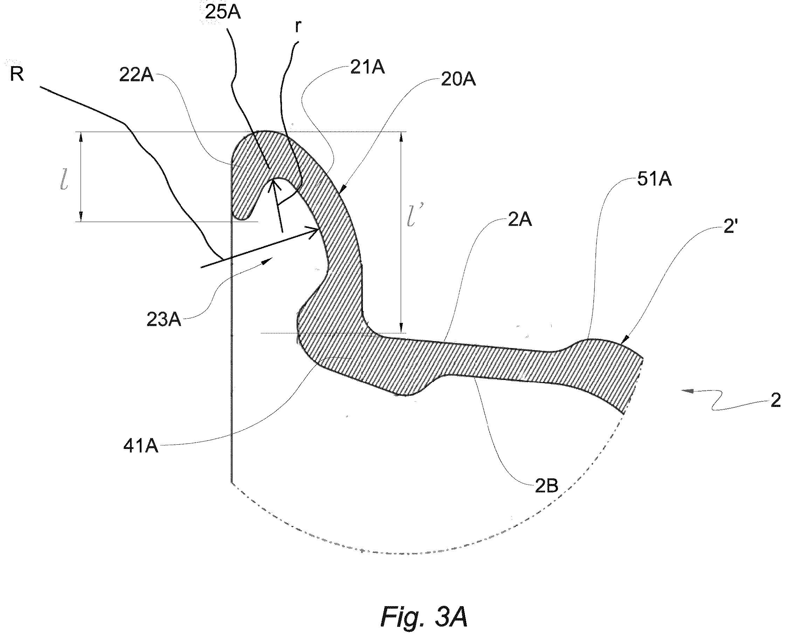

As may be observed in greater detail in Figures 3 and 3A, in a preferred embodiment in the rim 101 the internal edge 20A and the external edge 20B comprises a respective extension 22A, 22B which extends from the respective shoulder 21A, 21B.

In other words, according to a preferred embodiment, in the rim 101 there will be present an internal extension 22A and an external extension 22B which extend from the internal shoulder 21A and from the external shoulder 21B, respectively. It will be appreciated that in the context of the present invention the internal direction and external direction are unambiguously identified in relation to the assembly methods of the rim 101 on the vehicle.

It will be appreciated that, according to an aspect of the present invention, the extensions 22A, 22B extend in a radial direction away from the shoulder 21A, 21B, towards the axis of the rim.

Similarly to what has been illustrated in relation to the hub 1, channel 2 and spokes 3, the edges 20A, 20B, shoulders 21A, 21B and extensions 22A, 22B are also preferably produced as a single piece, therefore without welding or any other joining system between them, and are part of the same piece which forms the rim as a whole.

As may be observed in Figure 3A, the extension 22A is preferably connected to the shoulder 21A by means of a rounded connection portion 25A which allows a gradual variation in the extent of the edge 20A. It will be appreciated that the shoulder 21A may have an arcuate extent and, in this case, the concavity of the edge 20A may vary in a gradual manner between the zone which is adjacent to the internal surface 2A and the free side of the extension 22A. Preferably, the rounded portion 25A has a radius of curvature r in the region of the side which is directed towards the axis of the wheel between 0.25 mm and 11.5 mm.

On the basis of another aspect of the invention, the shoulder 21A has a radius of curvature R in the region of the side which is directed towards the axis of the wheel which is greater than the radius of curvature r of the rounded portion 25A.

In preferred embodiments, the ratio between the radius of curvature R of the shoulder 21A and the radius of curvature r of the rounded portion 25A is between 5 and 9, for example 7.

It is evident that the above-mentioned features have been illustrated in relation to the internal edge 20A but the same concepts may also be applied to the external edge 20B. Generally, in the description of the present invention, all the embodiments described could be applied to one or other of the edges, or to both edges, unless explicitly indicated otherwise.

Again with reference to Figure 3, according to preferred aspects the extension 22A is in the form of a curved portion of the edge 20A which, starting from a zone which is adjacent to the tyre, extends towards the rotation axis of the wheel, i.e., in the direction opposite the shoulder 22A, on which the bead is supported.

In some embodiments, this results in the presence of a separation space 23A, 23B which is defined between the extension 22A, 22B and the shoulder 21A, 21B. The separation space 23A, 23B therefore forms a distance in an axial direction between a portion of the extension and a portion of the shoulder, as illustrated in greater detail in the embodiment of Figure 3A.

In a first embodiment, the extension 22A extends over a distance of approximately 6 mm.

More generally, in preferred embodiments, the extension 22A, 22B may extend over a distance between 3 and 12 mm from the maximum diameter of the rim 100, i.e., from the zone of the rim nearest the tyre. Even more generally, the distance may be greater than or equal to 3 mm.

Now examining in greater detail the characteristics of the extension 22A, 22B, it is possible to observe how this extension preferably has a predominantly longitudinal extent and may be identified in the radial section of Figure 3A as an elongate tongue which extends from the shoulder. In other words, the extension 22A, 22B preferably has a predominantly rectilinear extent and is connected to the rounded portion 25A, 25B.

In some embodiments, the extension 22A has an external face, that is to say, a face directed towards the outer side of the rim, which is substantially perpendicular to the rotation axis of the wheel, while the internal face, i.e., the one directed towards the space 23A, is inclined with respect to this axis, at an angle which is preferably between 50° and 80°, for example, 65°. In this manner, the extension may advantageously be connected to the rounded portion in the region of the internal face, and may ensure the maximum strengthening effect in the external face.

In preferred embodiments, the ratio between the length l of the extension 22A, 22B and the maximum diameter of the rim 100 is preferably between 0.003 and 0.040. By way of example, in the embodiment of Figure 3 and 3A, this ratio is approximately 0.013.

It will further be appreciated that the extension 22A, 22B may advantageously run in a uniform manner over the entire circumference of the rim 100, thereby forming a ring which is coaxial with the rotation axis which extends from the shoulder 21A, 21B. If the separation space 23A, 23B mentioned above is defined, it may also have an annular shape, still coaxial with the rotation axis.

The extension 22A, 22B is further defined in terms of the characteristics thereof by the ratio between the extent in a radial direction of the extension 22A, 22B itself and that of the shoulder 21A, 21B.

In the present embodiment, this ratio is approximately 0.43. More generally, in preferred embodiments, this ratio is between 0.15 and 1.3.

Therefore, it appears to be evident that preferably the extension 22A, 22B though extending towards the axis of the rim does not reach a diameter corresponding to that of the base of the bead, i.e., of the zone in which the bead is connected to the internal surface 2A of the channel 2.

Still with reference to Figure 3A, it may be observed how the extension 22A, 22B may comprise at least a portion which extends inside a plane which is perpendicular to the rotation axis of the rim. This portion therefore defines a right side/left side, in the case of a motorcycle, or internal side/external side, in the case of a four-wheeled vehicle, of the rim, corresponding to the region of maximum axial extent of the rim itself. The tyre may in any case remain projecting with respect to this region, as occurs in other known solutions.

In some embodiments, the central portion 2' of the channel has an extent which the Applicant has observed to be particularly suitable for use for pairing with the extension 22A, 22B.

In the embodiment of Figure 3, the central portion 2' comprises an external protuberance 41A, 41B and an internal protuberance 51A, 51B.

It may be noted that in this case the adjective internal/external is in relation to the surfaces 2A and 2B, i.e., it refers to the side at which the tyre is mounted rather than the side opposite it.

It will be appreciated in any case that, in the context of the present invention, there may more generally be present at least one external protuberance which is therefore formed on the external surface 2B, and/or at least one internal protuberance which is instead formed on the internal surface 2A.

The presence of these protuberances allows a further reinforcement of the channel to the additional benefit of the characteristics of the rim of the present invention.

Preferably, the external protuberance 41A is adjacent to the connection zone between the central portion 2' and the shoulder.

In preferred embodiments, the internal protuberance 41B is adjacent to the intermediate part of the portion 2', to which the spokes 3 are connected. These protuberances are in the form of thickened portions of the channel 2.

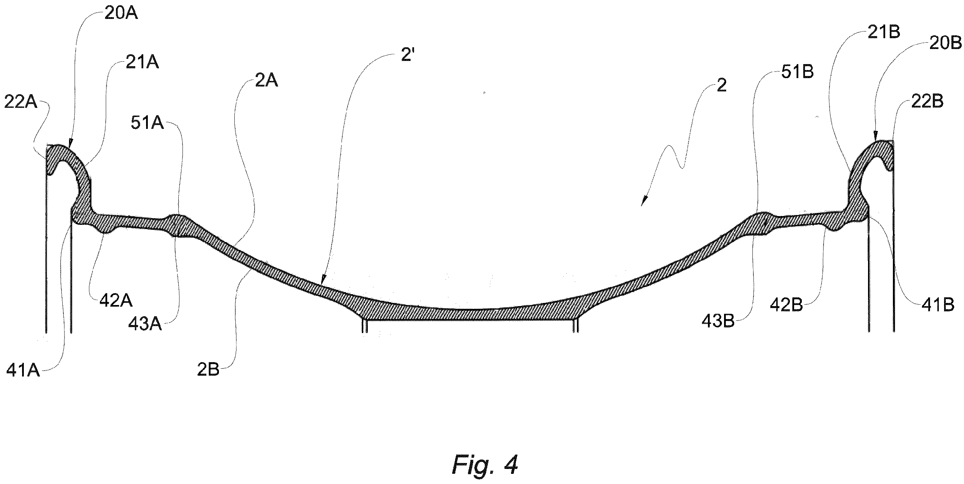

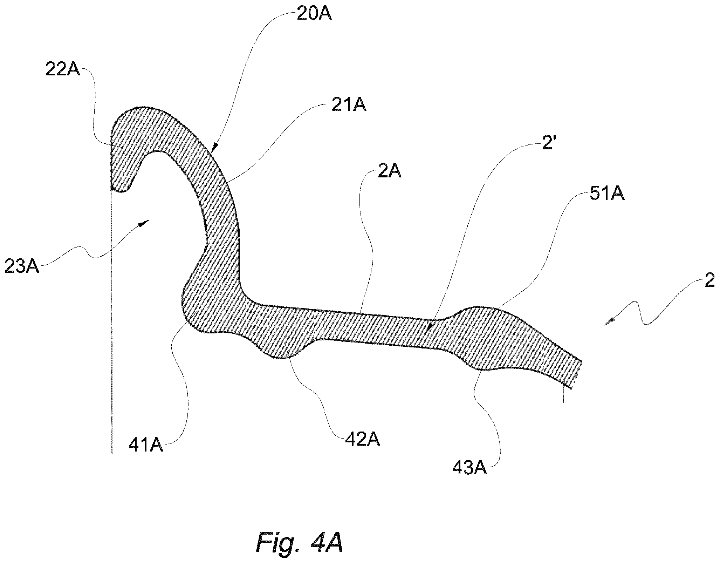

Figures 4 and 4A illustrate an additional embodiment of the present invention and depict a rim which is typically used on rear wheels of motor vehicles.

As may immediately be observed in the Figures, this embodiment differs as a result of the width of the rim, which is intended in this case to receive in the channel thereof a tyre of the rear type for motorcycles.

Furthermore, in this case the absolute dimensions of the extension 22A, 22B and the dimensional relationships between the extension and the shoulder are different with respect to those of the preceding embodiment. It is in any case evident that what has been illustrated in relation to the preceding embodiment can also be applied to the rim of Figures 4 and 4A and, generally, in each rim which is constructed according to the present invention.

Another difference with respect to the preceding embodiment is constituted by the number of protuberances, there being present in this case three external protuberances and an internal protuberance for each side of the rim.

More generally, according to a preferred embodiment, there are present two external protuberances 41A, 42A which are adjacent to each shoulder and which are spaced apart from each other in an axial direction.

Preferably, in some embodiments, an additional external protuberance 43A is arranged in a position opposite the internal protuberance 51A. It will in any case be appreciated that this arrangement of the protuberances can also be used in other embodiments, particularly in a rim with the characteristics described in Figures 3 and 3A.

Furthermore, it will be appreciated that, even if reference has been made to a motorcycle, the same inventive concepts may be applied to a motor vehicle and in general to vehicles with more than two wheels.

Therefore, the invention solves the problem proposed, at the same time achieving a number of advantages, including the possibility of ensuring greater rigidity for the wheel channel without an excessive increase of weight, therefore obtaining a smaller deformation of the wheel channel during operation.

These characteristics therefore contribute to improving the entry of the vehicle into bends, particularly in the case of a motorcycle, and more generally the fuel consumption on bends.

It has further been found that they have particular advantages during changes of direction which are more instantaneous and precise, and during acceleration and braking phases.

Finally, in general terms, the rim of the present invention allows the tyre to operate more correctly and, at the same time, transmits to the driver greater sensitivity.

## Claims

1. A rim (100) for vehicles comprising a hub (1), a channel (2) for receiving a tyre (101) and a plurality of spokes (3) which join the hub (1) and the channel (2), the channel (2) comprising a first edge (20A) and a second edge (20B), between which there is defined a seat (20) for the tyre (101), the first edge (20A) and the second edge (20B) comprising a respective abutment shoulder (21A, 21B) which is capable of retaining the bead (102) of the tyre (101), **characterized in that** the first edge (20A) and/or the second edge (20B) comprise(s) a respective extension (22A, 22B) which extends from a respective shoulder (21A, 21B) in a radial direction away from the shoulder (21A, 21B), the rim (100) being constructed as a single piece.

2. A rim (100) for vehicles according to claim 1, wherein the channel (2) comprises a central portion (2') which defines an internal surface (2A), which is directed during use towards the tyre (101), and an external surface (2B) which is directed towards the hub (1), each of the extensions (22A, 22B) being axially separated from the shoulder (21A, 21B) by a separation space (23A, 23B).

3. A rim (100) for vehicles according to claim 1 or claim 2, wherein the extension (22A, 22B) extends over a distance greater than or equal to 3 mm from a maximum diameter of the rim (100) and preferably between 3 and 12 mm from the maximum diameter of the rim (100).

4. A rim (100) for vehicles according to any one of the preceding claims, wherein the extension (22A, 22B) has a predominantly longitudinal extent, the ratio between the length (l) and the maximum diameter of the rim (100) of the extension (22A, 22B) preferably being greater than or equal to 0.003 and even more preferably between 0.003 and 0.04.

5. A rim (100) for vehicles according to any one of the preceding claims, wherein the extension (22A, 22B) extends from the shoulder (21A, 21B) in the form of a ring which is coaxial with respect to the rotation axis of the rim (100).

6. A rim (100) for vehicles according to any one of the preceding claims, wherein the extension (22A, 22B) comprises at least a portion which extends predominantly rectilinearly and wherein the portion which extends predominantly rectilinearly extends inside a plane perpendicular to the rotation axis of the rim (100).

7. A rim (100) for vehicles according to any one of the preceding claims, wherein the edge (20A, 20B) comprises a rounded connection portion (25A, 25B) which joins the shoulder (21A, 21B) and the extension (22A, 22B).

8. A rim (100) for vehicles according to claim 7, wherein the shoulder (21A, 21B) has an arcuate form, the radius of curvature (R) of the shoulder (21A, 21B) in the region of the side which is directed towards the axis of the wheel being greater than the radius of curvature (r) of the rounded connection portion (25A, 25B) in the region of the side which is directed towards the axis of the wheel, the ratio between the radius of curvature (R) of the shoulder (21A, 21B) and the radius of curvature (r) of the rounded connection portion (25A, 25B) preferably being between 5 and 9.

9. A rim (100) for vehicles according to claim 8, wherein the rounded connection portion (25A, 25B) has a radius of curvature (r) in the region of the side which is directed towards the axis of the wheel between 0.25 mm and 11.5 mm.

10. A rim (100) for vehicles according to any one of the preceding claims, wherein the central portion (2') comprises at least one external protuberance (41A, 42A, 43A, 41B, 42B, 43B) which is formed on the external surface (2B) and/or at least one internal protuberance (51A, 51B) which is formed on the internal surface (2A).

11. A rim (100) for vehicles according to claim 10, wherein the external protuberance (41A, 42A, 43A, 41B, 42B, 43B) and/or the internal protuberance (51A, 51B) are in the form of thickened portions of the channel (2).

12. A rim (100) for vehicles according to any one of the preceding claims, wherein the ratio between the extent in the radial direction of the extension (22A, 22B) and the shoulder (21A, 21B) is greater than or equal to 0.15 and preferably between 0.15 and 1.3.

13. A rim (100) for vehicles according to any one of the preceding claims, wherein the extensions (22A, 22B) extend in use in the opposite direction with respect to the tyre.

14. A rim (100) for vehicles according to any one of the preceding claims, wherein the extensions (22A, 22B) have an external face which is directed towards the outer side of the rim, which is substantially perpendicular to the rotation axis of the wheel, and an internal face, which is inclined with respect to the axis, at an angle of inclination which is preferably between 50° and 80°.

15. A rim (100) for vehicles according to any one of the preceding claims, wherein the hub (1), the channel (2), the spokes (3), the first edge (20A) and second edge (20B), the abutment shoulder (21A, 21B) and the extensions (22A, 22B) are constructed as a single piece from a material which is selected from the following: magnesium alloys, aluminium alloys, titanium, composite resins, plastics materials.

## Patentansprüche

1. Felge (100) für Fahrzeuge, umfassend einer Nabe (1), einem Felgenbett (2) zur Aufnahme eines Reifens (101) und einer Vielzahl an Speichen (3), welche die Nabe und das Felgenbett verbinden, das Felgenbett (2) umfasst eine erste Kante (20A) und eine zweite Kante (20B), zwischen welchen ein Sitz (20) für den Reifen (101) definiert ist, wobei die erste Kante (20A) und die zweite Kante (20B) jeweils eine Anschlagschulter (21A, 21B) umfassen, die in der Lage ist, den Wulst (102) des Reifens (101) zu halten, **dadurch gekennzeichnet, dass** die erste Kante (20A) und die zweite Kante (20B) eine jeweilige Verlängerung (22A, 22B) umfassen, die sich von einer jeweiligen Schulter (21A, 21B) in einer radialen Richtung weg von der Schulter (21A, 21B) erstreckt, wobei die Felge (100) aus einem Stück aufgebaut ist.

2. Felge (100) für Fahrzeuge nach Anspruch 1, wobei das Felgenbett (2) einen zentralen Abschnitt (2'), welcher eine innere Fläche (2A) definiert, welche bei Gebrauch zum Reifen (101) gerichtet ist, und einer äußeren Fläche (2B) umfasst, welche in Richtung der Nabe (1) gerichtet ist, wobei jede der Verlängerungen (22A, 22B) durch einen Trennungsbereich (23A, 23B) von der Schulter (21A, 21B) axial getrennt werden.

3. Felge (100) für Fahrzeuge nach Anspruch 1 oder Anspruch 2, wobei sich die Verlängerung (22A, 22B) über eine Distanz größer als oder gleich groß 3 mm vom maximalen Durchmesser der Felge (100) und bevorzugt zwischen 3 und 12 mm von maximalen Durchmesser der Felge (100) erstreckt.

4. Felge (100) für Fahrzeuge nach einem der vorhergehenden Ansprüche, wobei die Verlängerung (22A, 22B) eine überwiegende Längsausdehnung aufweist, das Verhältnis zwischen der Länge (I) und dem maximalen Durchmesser der Felge (100) der Verlängerungen (22A, 22B) ist vorzugsweise größer oder gleich 0.003 und besonders bevorzugt zwischen 0,003 und 0,04.

5. Felge (100) für Fahrzeuge nach einem der vorhergehenden Ansprüche, wobei die Verlängerung (22A, 22B) sich von der Schulter (21A, 21B) in Form eines Rings erstreckt, welcher koaxial in Bezug zur Rotationsachse der Felge (100) ist.

6. Felge (100) für Fahrzeuge nach einem der vorhergehenden Ansprüche, wobei die Verlängerung (22A, 22B) zumindest einen Abschnitt umfasst, welcher überwiegend geradlinig verläuft und wobei sich der Abschnitt, welcher überwiegend gradlinig verläuft, innerhalb einer Ebene erstreckt, die senkrecht zur Rotationsachse der Felge (100) ist.

7. Felge (100) für Fahrzeuge nach einem der vorhergehenden Ansprüche, wobei die Kante (20A, 20B) einen abgerundeten Verbindungsabschnitt (25A, 25B) umfasst, welcher die Schulter (21A, 21B) und die Verlängerung (22A, 22B) verbindet.

8. Felge (100) für Fahrzeuge nach Anspruch 7, wobei die Schulter (21A, 21b) eine Bogenform hat, wobei der Krümmungsradius (R) der Schulter (21A, 21B) im Bereich der Seite, welche der Radachse zugewandt ist, größer ist als der Krümmungsradius (r) des abgerundeten Verbindungsabschnitts (25A, 25B) im Bereich der zur Radachse gerichteten Seite, wobei das Verhältnis zwischen dem Krümmungsradius (R) der Schulter (21A, 21B) und dem Krümmungsradius (r) des abgerundeten Verbindungsabschnitts (25A, 25B) vorzugsweise zwischen 5 und 9 liegt.

9. Felge (100) für Fahrzeuge nach Anspruch 8, wobei das abgerundete Verbindungsstück (25A, 25B) einen Krümmungsradius (r) im Bereich der Seite, welche der Radachse zugewandt ist, zwischen 0,25 mm und 11,5 mm hat.

10. Felge (100) für Fahrzeuge nach einem der vorhergehenden Ansprüche, wobei der zentrale Abschnitt (2') mindestens eine äußere Ausstülpung (41A, 42A, 43A, 41B, 42B, 43B) umfasst, welche auf der äußeren Fläche (2A) gebildet ist und/oder mindestens eine innere Ausstülpung (51A, 51b), welche auf der inneren Fläche (2B) gebildet ist.

11. Felge (100) für Fahrzeuge nach Anspruch 10, wobei die äußere Ausstülpung (41A, 42A, 43A, 41B, 42B, 43B) und/oder die innere Ausstülpung (51A, 51B) die Form verdickter Abschnitte des Kanals (2) haben.

12. Felge (100) für Fahrzeuge nach einem der vorhergehenden Ansprüche, wobei das Verhältnis zwischen der Ausdehnung in radialer Richtung der Verlängerung (22A, 22B) und der Schulter (21A, 21B) größer oder gleich 0,15 ist und vorzugsweise zwischen 0,15 und 1,3 liegt.

13. Felge (100) für Fahrzeuge nach einem der vorhergehenden Ansprüche, wobei sich die Verlängerungen (22A, 22B) im Gebrauch in der entgegengesetzten Richtung bezüglich des Reifens ausdehnen.

14. Felge (100) für Fahrzeuge nach einem der vorhergehenden Ansprüche, wobei die Verlängerungen (22A, 22B) eine externe Fläche haben, welche zur Außenseite der Felge gerichtet ist, welche im Wesentlichen senkrecht zur Rotationsachse des Rads ist, und einer inneren Fläche, welche gegenüber der Achse geneigt ist, bei einem Neigungswinkel, welcher vorzugsweise zwischen 50° und 80° liegt.

15. Felge (100) für Fahrzeuge nach einem der vorhergehenden Ansprüche, wobei die Nabe (1), das Felgenbett (2), die Speichen (3), die erste Kante (20A) und die zweite Kante (20B), die Anschlagschulter (21A, 21B) und die Verlängerungen (22A, 22B) aus einem einzigen Stück eines Materials hergestellt wird, dass aus folgenden ausgewählt ist: Magnesiumlegierungen, Aluminiumlegierungen, Titan, Verbundharze, Kunststoffe.

## Revendications

1. Jante (100) pour véhicules comprenant un moyeu (1), un creux (2) destiné à recevoir un pneu (101) et une pluralité de rayons (3) qui relient le moyeu (1) et le creux (2), le creux (2) comprenant un premier bord (20A) et un second bord (20B), entre lesquels est défini un siège (20) destiné au pneu (101), le premier bord (20A) et le second bord (20B) comprenant un épaulement de butée respectif (21A, 21B) permettant de retenir le talon (102) du pneu (101), **caractérisée en ce que** le premier bord (20A) et/ou le second bord (20B) comprennent un prolongement respectif (22A, 22B) qui s'étend d'un épaulement respectif (21A, 21B) dans une direction radiale à l'opposé de l'épaulement (21A, 21B), la jante (100) étant construite en tant que pièce unitaire.

2. Jante (100) pour véhicules selon la revendication 1, dans laquelle le creux (2) comprend une partie centrale (2') qui définit une surface interne (2A) qui est orientée, en utilisation, en direction du pneu (101), et une surface externe (2B) qui est orientée en direction du moyeu (1), chacun des prolongements (22A, 22B) étant séparé axialement de l'épaulement (21A, 21B) par un espace de séparation (23A, 23B).

3. Jante (100) pour véhicules selon la revendication 1 ou la revendication 2, dans laquelle le prolongement (22A, 22B) s'étend sur une distance supérieure ou égale à 3 mm à partir d'un diamètre maximal de la jante (100) et de préférence entre 3 et 12 mm à partir du diamètre maximal de la jante (100).

4. Jante (100) pour véhicules selon l'une quelconque des revendications précédentes, dans laquelle le prolongement (22A, 22B) a une étendue principalement longitudinale, le rapport entre la longueur (1) et le diamètre maximal de la jante (100) du prolongement (22A, 22B) étant de préférence supérieur ou égal à 0,003 et voire même idéalement compris entre 0,003 et 0,04.

5. Jante (100) pour véhicules selon l'une quelconque des revendications précédentes, dans laquelle le prolongement (22A, 22B) s'étend à partir de l'épaulement (21A, 21B) sous la forme d'un anneau qui est coaxial à l'axe de rotation de la jante (100).

6. Jante (100) pour véhicules selon l'une quelconque des revendications précédentes, dans laquelle le prolongement (22A, 22B) comprend au moins une partie qui s'étend de manière principalement rectiligne et dans laquelle la partie qui s'étend de manière principalement rectiligne s'étend à l'intérieur d'un plan perpendiculaire à l'axe de rotation de la jante (100).

7. Jante (100) pour véhicules selon l'une quelconque des revendications précédentes, dans laquelle le bord (20A, 20B) comprend une partie de liaison arrondie (25A, 25B) qui relie l'épaulement (21A, 21B) et le prolongement (22A, 22B) .

8. Jante (100) pour véhicules selon la revendication 7, dans laquelle l'épaulement (21A, 21B) a une forme arquée, le rayon de courbure (R) de l'épaulement (21A, 21B) dans la région du côté orienté en direction de l'axe de la roue étant supérieur au rayon de courbure (r) de la partie de liaison arrondie (25A, 25B) dans la région du côté orienté en direction de l'axe de la roue, le rapport entre le rayon de courbure (R) de l'épaulement (21A, 21B) et le rayon de courbure (r) de la partie de liaison arrondie (25A, 25B) étant de préférence compris entre 5 et 9.

9. Jante (100) pour véhicules selon la revendication 8, dans laquelle la partie de liaison arrondie (25A, 25B) a un rayon de courbure (r) dans la région du côté orienté en direction de l'axe de la roue compris entre 0,25 mm et 11,5 mm.

10. Jante (100) pour véhicules selon l'une quelconque des revendications précédentes, dans laquelle la partie centrale (2') comprend au moins une protubérance externe (41A, 42A, 43A, 41B, 42B, 43B) qui est formée sur la surface externe (2B) et/ou au moins une protubérance interne (51A, 51B) qui est formée sur la surface interne (2A) .

11. Jante (100) pour véhicules selon la revendication 10, dans laquelle la protubérance externe (41A, 42A, 43A, 41B, 42B, 43B) et/ou la protubérance interne (51A, 51B) se présentent sous la forme de parties épaissies du creux (2).

12. Jante (100) pour véhicules selon l'une quelconque des revendications précédentes, dans laquelle le rapport entre l'étendue dans la direction radiale du prolongement (22A, 22B) et l'épaulement (21A, 21B) est supérieur ou égal à 0,15 et est de préférence compris entre 0,15 et 1,3.

13. Jante (100) pour véhicules selon l'une quelconque des revendications précédentes, dans laquelle les prolongements (22A, 22B) s'étendent, en utilisation, dans le sens contraire par rapport au pneu.

14. Jante (100) pour véhicules selon l'une quelconque des revendications précédentes, dans laquelle les prolongements (22A, 22B) comportent une face externe qui est orientée vers le côté extérieur de la jante, qui est sensiblement perpendiculaire à l'axe de rotation de la roue, et une face interne, qui est inclinée par rapport à l'axe, à un angle d'inclinaison s'inscrivant de préférence entre 50° et 80°.

15. Jante (100) pour véhicules selon l'une quelconque des revendications précédentes, dans laquelle le moyeu (1), le creux (2), les rayons (3), le premier bord (20A) et le second bord (20B), l'épaulement de butée (21A, 21B) et les prolongements (22A, 22B) sont construits en tant que pièce unitaire à partir d'un matériau qui est sélectionné parmi les matériaux suivants : des alliages de magnésium, des alliages d'aluminium, du titane, des résines composites, des matières plastiques.
